# EUROPEAN PATENT APPLICATION

(11) **EP 1 806 754 A2**
(43) Date of publication of application: **11.07.2007**
(21) Application number: 06126882.7
(22) Date of filing: 21.12.2006
(51) Int. Cl.: G21C 17/10, G21C 7/36

(54) **System and method for collecting and transmitting nuclear reactor control rod position information**

(30) Priority: 04.01.2006 US 325644
(71) Applicant: General Electric Company, Schenectady, NY 12345 (US)
(72) Inventor: Curbo, David Michael, Wilmington, CA 28411 (US); Sawyer, Steven Dale, San Jose, CA 95148 (US); Hoffmann, Nicholas Adam, Wilmington, NC 28405 (US); Steiner, William Michael, San Jose, CA 95119 (US); Chi, Lawrence Li, Palo Alto, CA 94306 (US); Leighty, Craig Ernest, Pleasanton, CA 94566 (US)
(74) Representative: Bedford, Grant Richard

(57) **Abstract**

A system and method for collecting control rod position data in a nuclear reactor includes a position data multiplexer module (206) coupled to a plurality of first position sensors (204) associated with a first control rod (54) and a plurality of second position sensors (204) associated with a second control rod (54), the multiplexer module (206) configured for multiplexing first control rod position data and second control rod position data into a first multiplexed position signal (208), and transmitting the first multiplexed position signal (208) over a bus communication facility (212) in parallel with a second multiplexed position signal (208) having third control rod position data from a third control rod (54).

## Description

The present disclosure relates generally to nuclear reactors and, more particularly, to systems and methods for collecting and transmitting nuclear reactor control rod position information.

A reactor pressure vessel (RPV) of a boiling water reactor (BWR) typically has a reactor core formed from a plurality of fuel elements located within the reactor pressure vessel. The fuel elements are grouped to form a fuel bundle and a sufficient number of fuel bundles are combined to form a reactor core capable of a self-sustaining chain reaction. Neutron-absorbing control rods are inserted into the core to control the reactivity of the core. The reactivity of the core can be adjusted by incremental insertions and withdrawals of the control rod. Each control rod is housed in a guide tube and is moved within the guide tube by a control rod drive that is controlled by a rod drive control system. The rod drive control system controls a hydraulic control unit that causes the control rod drive to move the control rod, either inserting or withdrawing the control rod from the core's fuel bundle.

Because the control rods are the primary means for the nuclear reaction with the nuclear core, it is essential that the position of each control rod within the core bundle be identified and monitored in order to provide position data for controlling the control rods and therefore the nuclear reaction. A magnet is typically associated with each control rod and is detected by a reed switch positioned to detect the proximity of the magnet and therefore the position of the control rod within the core bundle. The reed switches generate a position signal that is periodically scanned and collected by a collection module. A control rod position signal is transmitted to a control rod management system by a plurality of collection modules over a shared serial data communication facility coupled to an intermediate collection module that collects the control rod data and forwards it to a control rod management system.

The inventors hereof have recognized that the current systems and methods for collecting and transmitting control rod position data are not as robust and reliable as is desired for controlling such a critical component of a nuclear reactor. The current systems receive position signals from the control rod position sensors over a serial communication facility and therefore the rod control systems are only provided control rod position data on a relatively slow update rate. The inventors have designed systems and methods as described herein that, in some embodiments, provide for higher data collection rates for control rod position information and improved transmission of the collected control rod position data to control rod management and control systems by utilizing transmission of multiplexed position signals over a bus communication facility in parallel with other multiplexed position signals. Some embodiments as described in this disclosure can provide for improved control rod position data updates that can enhance the management and control of the control rods within the nuclear reactor core.

According to one aspect, a system for collecting control rod position data in a nuclear reactor includes a position data multiplexer module coupled to a plurality of first position sensors associated with a first control rod and a plurality of second position sensors associated with a second control rod, the multiplexer module configured for multiplexing first control rod position data and second control rod position data into a first multiplexed position signal, and transmitting the first multiplexed position signal over a bus communication facility in parallel with a second multiplexed position signal having third control rod position data from a third control rod.

According to another aspect, in a nuclear power plant, a system includes a first position data multiplexer module, a second position data multiplexer module, and a control module. The first position data multiplexer module is coupled to a plurality of first position sensors associated with a first control rod and a plurality of second position sensors associated with a second control rod and is configured for receiving first control rod position data from the first position sensors, receiving second control rod position data from the second position sensors, multiplexing the first control rod position data and the second control rod position data into a first multiplexed position signal associated with the first control rod and the second control rod, and transmitting the first multiplexed position signal over a bus communication facility. The second position data multiplexer module is coupled to a plurality of third position sensors associated with a third control rod and a plurality of fourth position sensors associated with a fourth control rod, and is configured for receiving third control rod position data from the third position sensors, receiving fourth control rod position data from the fourth position sensors, multiplexing the third control rod position data and the fourth control rod position data into a second multiplexed position signal associated with the third control rod and the fourth control rod, and transmitting the second multiplexed position signal over the bus communication facility in parallel with the first multiplexed position signal. The control module is coupled to the bus communication facility and configured for receiving the first multiplexed position signal in parallel with the second multiplexed position, multiplexing at least a portion of the first multiplexed position signal with at least a portion of the second multiplexed position signal into a composite position signal, and transmitting the composite position signal over a data communication facility.

According to yet another aspect, a method in a nuclear reactor including multiplexing first control rod position data and second control rod position data into a first multiplexed position signal, multiplexing third control rod position data and fourth control rod position data into a second multiplexed position signal, and transmitting the first multiplexed position signal over a bus communication facility in parallel with the second multiplexed position signal.

According to still another aspect, a method in a nuclear reactor control system including determining first control rod position data from a plurality of first position sensors associated with a first control rod, and determining second control rod position data from a plurality of second position sensors associated with a second control rod. The method also includes multiplexing the first control rod position data and the second control rod position data into a first multiplexed position signal associated with the first control rod and the second control rod, and transmitting the first multiplexed position signal over the bus communication facility in parallel with a second multiplexed position signal having third control rod position data from a plurality of third position sensors associated with a third control rod. The method further includes receiving the first multiplexed position signal and the second multiplexed position over the bus communication facility, multiplexing at least a portion of the first multiplexed position signal with at least a portion of the second multiplexed position signal into a composite position signal, and transmitting the composite position signal over a data communication facility.

Further aspects of the present invention will be in part apparent and in part pointed out below. It should be understood that various aspects of the invention may be implemented individually or in combination with one another. It should also be understood that the detailed description and drawings, while indicating certain exemplary embodiments of the invention, are intended for purposes of illustration only and should not be construed as limiting the scope of the invention.

Various aspects and embodiments of the invention will now be described in connection with the accompanying drawings, in which:
FIG. 1 is a sectional view, with parts cut away, of a boiling water nuclear reactor pressure vessel (RPV) environment suitable for some exemplary embodiments of the invention.
FIG. 2 is a simplified block diagram of a control rod position collection system according to one exemplary embodiment of the invention.
FIG. 3 is a block diagram of a control rod position information system according to another exemplary embodiment of the invention.
FIG. 4 is a block diagram of a control rod control management system utilizing a control rod position collection and transmission system and method according to another exemplary embodiment of the invention.
FIG. 5 is a block diagram of a computer system that can be used to implement some embodiments or components of the system and/or method for collecting and transmitting nuclear reactor control rod position information.

It should be understood that throughout the drawings, corresponding reference numerals indicate like or corresponding parts and features.

The following description is merely exemplary in nature and is not intended to limit the present disclosure, or the disclosure's applications and uses.

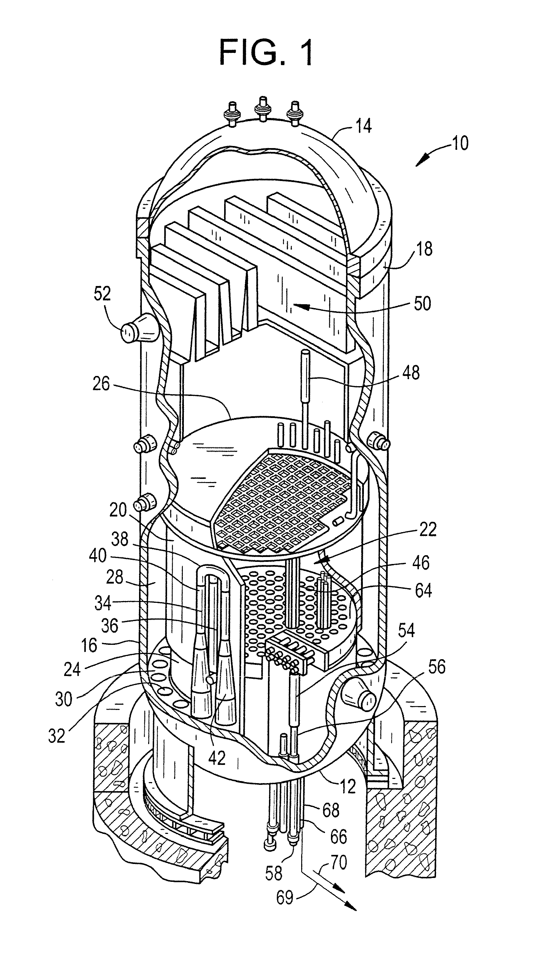

One exemplary embodiment of an operating environment for such a nuclear reactor control rod position data collection system is illustrated in Fig. 1. Fig. 1 is a sectional view, with parts cut away, of a boiling water nuclear reactor pressure vessel (RPV) 10. The reactor pressure vessel 10 has a generally cylindrical shape and is closed at one end by a bottom head 12 and at its other end by a removable top head 14. A side wall 16 extends from bottom head 12 to top head 14. Side wall 16 includes a top flange 18. Top head 14 is attached to top flange 18. A cylindrically shaped core shroud 20 surrounds a reactor core 22. The shroud 20 is supported at one end by a shroud support 24 and includes an opposed removable shroud head 26. An annulus 28 is formed between shroud 20 and side wall 16. A pump deck 30, which has a ring shape, extends between shroud support 24 and RPV side wall 16. The pump deck 30 includes a plurality of circular openings 32, with each opening housing a jet pump 34. The jet pumps 34 are circumferentially distributed around the core shroud 20. An inlet riser pipe 36 is coupled to two jet pumps 34 by a transition assembly 38. Each jet pump 34 includes an inlet mixer 40, and a diffuser 42.

Heat is generated within the core 22, which includes fuel bundles 46 of fissionable material. Water circulated up through the core 22 is at least partially converted to steam. Steam separators 48 separate the steam from the water, and the water is recirculated. Steam dryers 50 remove residual water from the steam. The steam exits reactor pressure vessel 10 through a steam outlet 52 near vessel top head 14. The amount of heat generated in the core 22 is regulated by inserting and withdrawing a plurality of control rods 54 of neutron absorbing material, for example, hafnium. To the extent that a control rod 54 is inserted into fuel bundle 46, it absorbs neutrons that would otherwise be available to promote the chain reaction which generates heat in core 22.

The control rod 54 couples with a control rod drive (CRD) 58 which moves the control rod 54 relative to a core plate 64 and the fuel bundles 46, thereby controlling the nuclear reaction within the core 22. The control rod drive 58 extends through the bottom head 12 and is enclosed in a control rod drive housing 66. A control rod guide tube 56 extends vertically from control rod drive housing 66 to core plate 64. The control rod guide tubes 56 restrict non-vertical motion of the control rods 54 during insertion and withdrawal.

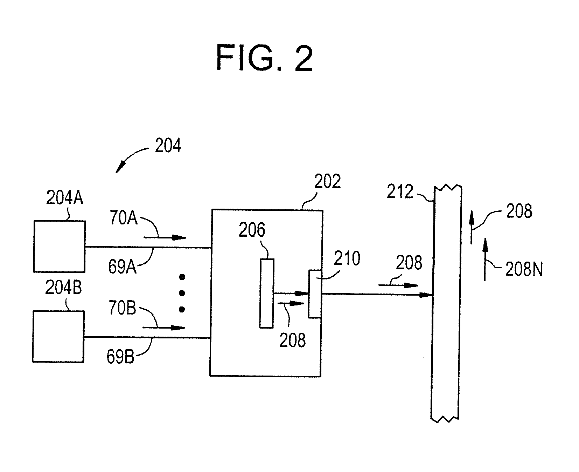

A plurality of rod position probes 68, each having a plurality of control rod position sensors (not shown in Fig. 1, but see Fig. 2 and related discussion below) and each being associated with one of the control rods 54, are located underneath the reactor pressure vessel 10. Each position probe 68 provides control rod position data 70 generated by control rod position sensors over a sensor data facility 69. The control rod position data 70 is collected and transmitted to a rod position information system (RPIS) or similar system (not shown in Fig. 1). In some embodiments, while not specifically discussed below, one or more of the control rod position collecting and transmission components, systems, or methods may be redundant or duplicated, combined or implemented as a separate module or system, and are still considered to be within the scope of this disclosure.

In some embodiments, a system for collecting control rod position data in a nuclear reactor includes a position data multiplexer module coupled to a plurality of first position sensors associated with a first control rod and a plurality of second position sensors associated with a second control rod, the multiplexer configured for multiplexing first control rod position data and second control rod position data into a first multiplexed position signal, and transmitting the multiplexed position signal over a bus communication facility in parallel with a second multiplexed position signal having third control rod position data from a third control rod.

Fig. 2 illustrates a simplified block diagram of a control rod position collection system according to one exemplary embodiment. As shown, a position data multiplexer module 202 is coupled to first rod position sensors 204A for receiving first control rod position data 70A and second rod position sensors 204B for receiving second control rod position data 70B. A multiplexer sub-module 206 multiplexes the first control rod position data 70A and the second control rod position data 70B into a first multiplexed position signal 208. A transmission sub-module 210 formats the first multiplexed position signal 208 and transmits the first multiplexed position signal 208 over a bus transmission facility 212 in parallel with one or more other similarly multiplexed position signals 208N. The bus transmission facility 212 can be any type of transmission facility and protocol capable of supporting the receipt and transmission of two or more data or transmission signals in parallel communication over a bus rather than serial communication. The one or more other multiplexed position signals includes multiplexed position data from sensors 204N (not shown) associated with other control rods 54.

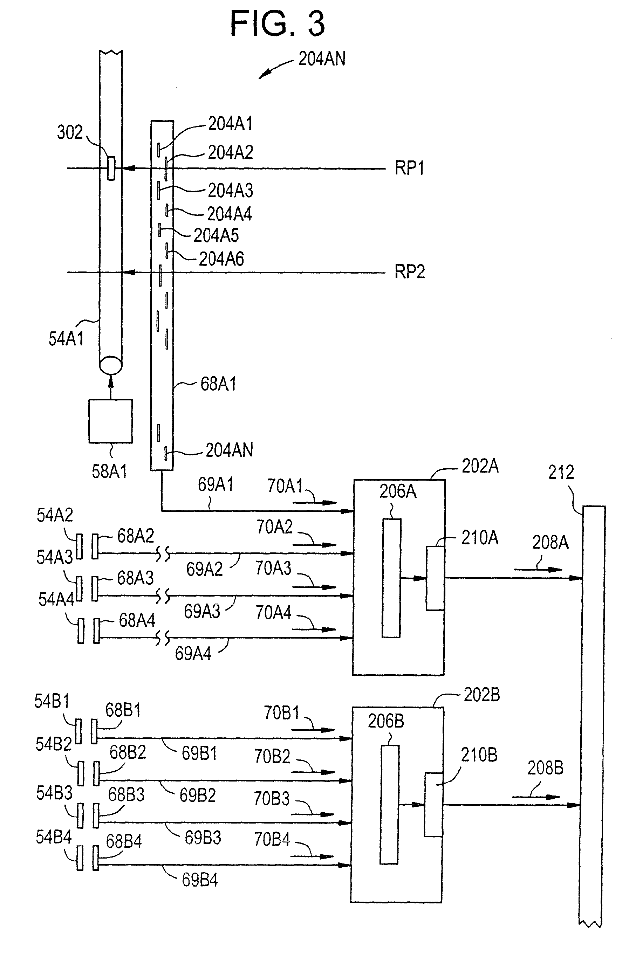

Fig. 3 illustrates another exemplary embodiment. As shown, a first control rod 54A1 is moved within the core 22 (shown in Fig. 1) by a first control rod drive 58A1 and relative to an associated first position probe 68A1. The first control rod 54A1 includes a position emitter 302 positioned on or associated with the first control rod 54A1 or the first control rod drive 58A1 and is configured for interacting with position sensors 204AN for identifying the position of first control rod 54A1 with the core 22. The position emitter 302 can be any type of device capable of having a position or relative position sensed by one or more position sensors 204 and in one embodiment, is a magnet or magnetic device, by way of example. The position sensors 204 can be any type of device configured for detecting the presence of the position emitter 302 and in one embodiment is a reed switch, by way of example.

Each of the position sensors 204 is coupled to a sensor data facility 69 for transporting position data 70A1 to a first position collection device or system such as a position data multiplexer module 202A. The position sensors 204 can provide an individual signal over a dedicated sensor data facility 69 or can be coupled or wired as a group or matrix of wires or as individual sensor data facilities 69 so as to enable the utilization of a fewer number of physical sensor data facilities 69 than the number of position sensors 204 on the associated position probe 68A1. For example, in one exemplary embodiment, a position probe 68 has 53 reed switches positioned at intervals along a 13 foot length of the position probe 68, with each reed switch being positioned to determine at least one proximity of the position emitter 302 as the control rod 54 is positioned within the core 22. The 53 reed switches can be coupled such that approximately one-half of the reed switches are coupled in parallel and that the position data 70 from each of the 53 reed switches are transmitted over a sensor data facility 69 having a 5 x 6 matrix of wires. By utilizing the 5 x 6 wire matrix as the sensor data facility 69, fewer wires are required to transmit the sensor position signals 70 from the 53 position sensors 204 of one position probe 68. This is only one example and other arrangements and coupling mechanisms can also be utilized consistent with the current disclosure.

Referring again to Fig. 3, a single position emitter 302A1 is illustrated at a first position RP1. In first position RP1, sensor 204A1-A detects the presence of position emitter 302A1 and sends a position signal 70A1 indicative of the proximate position of emitter 302. However, if a the control rod 54A1 is moved downward by control rod drive 58A1 to rod position RP2, position sensor 204A1-5 will then detect the proximate position of emitter 302A1 and sends a related position signal 70A1. At this time, the position sensor 204A1-1 no longer sends the signal 70A1.

As such, the position data 70A1 is provided to first position data multiplexer module 202A for position data generated by the first position sensors 204A1-1 and 204A1-5, as well as the other sensors 204A1-2 to 204A1-N during the movement from position RP1 to position RP2. Similarly, after movement of the control rod 54A1 the first position data multiplexer module 202A receives second position data 70A2 from second position sensors 204A2-N (not shown) associated with a second position probe 68A2 and a second control rod 54A2. Additional, third position data 70A3 and fourth position data 70A4 can also be transmitted to first position data multiplexer module 202A from additional control rods 54A3 and 54A4, respectively. While four control rods 54A1 to 54A4 are illustrated in Fig. 3, it should be understood that one or more control rods 54 can be associated with the first position data multiplexer module 202A and any of the other position data multiplexer modules 202 and still be within the scope of the current disclosure. The first multiplexer 202 multiplexes one or more of the received position data 70A1, 70A2, 70A3 and/or 70A4 into a multiplexed position signal 208A and transmits the first multiplexed position signal 208A over the bus communication facility 212.

Similarly, one or more additional position data multiplexer modules 202B can also receive one or more position data 70, such as position data 70B1, 70B2, 70B3 and/or 70B4 from position probes 68B1, 68B2, 68B3 and 68B4, respectively. The additional position data multiplexer modules 202B include a multiplexer sub-module 206B and bus communications sub-module 210B that multiplex and generate a second (or third or more) multiplexed position signal 208B and that transmit the second multiplexed position signal 208B over the bus communication facility 212 in parallel with the first multiplexed position signal 208A and possibly third, fourth or more additional multiplexed position signals 208N. In this manner, each of the control rod position multiplexer modules 202 can receive the position data 70 on a short interval basis and can transmit the multiplexed position signal 208 including the position data 70 over the shared bus communication facility 212 without delay and therefore at a improved rate and repeat the transmission at decreased intervals.

For example, in some embodiments the transmission of current and timely position data 70 for each and every sensor 204 associated with each and every control rod 54 within a reactor core 22 can preferably occur at intervals of equal to or less than about once every 5 msec. At this preferred rate for rod position data collection and transmission, various operational control improvement are enabled as compared to other systems that heretofore have only collected and transmitted rod position data at rates that are greater than every 50 msec. This is a benefit as a collecting and transmitting data rate of equal to or less than can provide for detailed rod position data during a reactor scram that provides for a movement of the control rod 54 from a full out to full in position in about 3 seconds. As such, some operations of the reactor can be improved that provide for increased safety and improved efficiency of reactor operations.

In other embodiments, a system for collecting and transmitting control rod position data in a nuclear power plant includes a first position data multiplexer module, a second position data multiplexer module, and a position data control module. The first position data multiplexer module is coupled to a plurality of first position sensors associated with a first control rod and a plurality of second position sensors associated with a second control rod and is configured for receiving first position data from the first position sensors, receiving second position data from the second position sensors, multiplexing the first position data and the second position data into a first multiplexed position signal associated with the first control rod and the second control rod, and transmitting the first multiplexed position signal over a bus communication facility.

The second position data multiplexer module is coupled to a plurality of third position sensors associated with a third control rod and a plurality of fourth position sensors associated with a fourth control rod, and is configured for receiving third position data from the third position sensors, receiving fourth position data from the fourth position sensors, multiplexing the third position data and the fourth position data into a second multiplexed position signal associated with the third control rod and the fourth control rod, and transmitting the second multiplexed position signal over the bus communication facility in parallel with the first multiplexed position signal. The position data control module is coupled to the bus communication facility and configured for receiving the first multiplexed position signal in parallel with the second multiplexed position, multiplexing at least a portion of the first multiplexed position signal with at least a portion of the second multiplexed position signal into a composite position signal, and transmitting the composite position signal over a data communication facility.

In some embodiments, a control rod position information system is coupled to the data communication facility and configured for receiving the transmitted composite position signal. Such a control rod position information system can be further configured for utilizing the received composite position signal as well as one or more of the position data provided therein for management of the control rod. For example, the control rod position information system can be configured to determine or calculate as a function of the received composite position signal, the velocity and/or acceleration of one or more control rods, as described above.

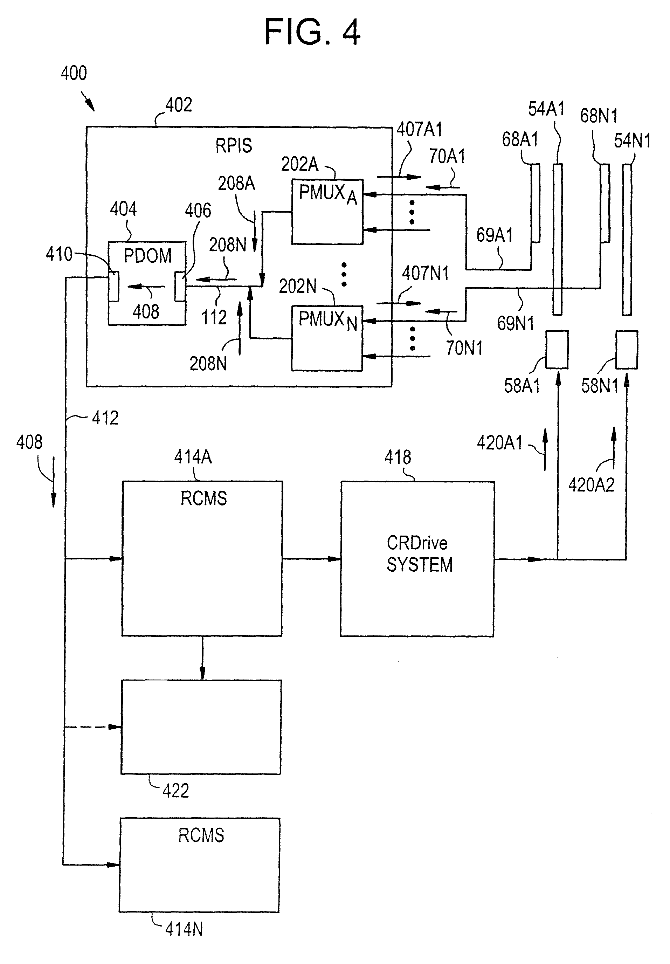

Referring now to Fig. 4, a rod control system 400 includes the position probe 68 that can be inserted into a probe tube of a control rod drive 58. Each position probe 68 can include a plug and receptacle, a thermocouple, and a plurality of position sensors, such as 53 normally-open reed switches (often referred to by switch numbers S00 through S52, including both even and odd switches) that are positioned along a predetermined length, such as about 13 feet. The position of the control rod drive 58 and therefore the control rod 54 is determined by actuation of the reed switches when the magnet or emitter 302 attached to the drive piston of the control rod drive 58 is proximate to the detection point of the position sensor 204.

The position sensors 204 can be closed individually at each position proximate to the magnet/emitter 302. In some embodiments, the control rod drive 58 operates to move the control rod 54 based on defined locking positions that are associated with one or more of the position sensors 204 along the length of the piston of the control rod drive 58. In such embodiments, the position sensors 204 individually close at each locking position (defined by the even numbered position sensors 204) and at the halfway points between locking positions (defined by the odd numbered position sensors 204). The position sensors 204 can be biased with a voltage generated by the position data multiplexer module 202. When the position sensor 204 is closed, an analog signal, such as position data 70, is transmitted to the position data multiplexer module 202 by the particular position sensor 204. The position of the control rod 54 can range from control rod full-in during reactor shutdown to control rod full-out during full power reactor operation.

The rod control system 400 can include a rod position information system (RPIS) 402 having a plurality of position data multiplexer modules 202A to 202N. Each position data multiplexer module 202 is coupled via a position data facility 69 to one or more position probes 68 and their associated position sensors 204 (not shown in Fig. 4). As discussed above, each position probe 68 detects the position of an associated control rod 54 and generates position data 70A1 that is transmitted over position sensor data facility 69A1 to the position data multiplexer module 202A. The position data multiplexer module 202A receives one or more position data 70N, multiplexes the position data 70A to produce a multiplexed position signal 208A, and transmits the multiplexed position signal 208A over bus communication facility 212 in parallel with one or more other multiplexed position signals 208N.

In some such embodiments, the bus communication facility 212 can be implemented as a backplane for one or more circuit cards to provide the parallel bus communication path between the various inserted cards configured with one or more position data multiplexer modules 202. Additionally, the position data control module 404 can also be implemented as an additional circuit card also coupled to the same backplane. The bus communication facility 212 enables the parallel communication of the various position data multiplexer module 202 circuit cards to the position data control module 404 circuit card without impeding or otherwise interrupting the communication of the other position data multiplexer module 202 circuit cards with the position data control module card 404. In such embodiments, one or more position data multiplexer module 202 circuit cards can be removed from the rod position information system 402 or a cabinet associated therewith, without impacting the collecting and transmitting of control rod position data 70 from the other position data multiplexer module 202 circuit cards.

The position data multiplexer module 202 can generate a position sensor bias voltage 407A1 to 407N1 to enable the activation of the generation of the position data 70 by the position sensor 204 in the presence of the position emitter 302. The position data multiplexer module 202 senses the status of the position sensors 204 of each associated and coupled position probe 68. The bias voltages 407A1 to 407N1 can in some embodiments be individually selected for each of a plurality of sets of coupled position probe position sensors 204. The bias voltage can be the same or different for each coupled position probe 68 and can be selectable by reactor operational personnel to enable the proper operation of the particular set of position sensors 204. In some embodiments, the bias voltages 407A1 to 407N1 for each set of position sensors 204 can be set at or via the position data multiplexer module 202 during normal operations to enable adjustment for changes in operating conditions. In various embodiments, the bias voltage 407 can be direct current voltages of about 5 Vdc, about 12 Vdc, and about 24 Vdc, by way of example. Of course other direct current or alternating current voltages can also be utilized and still be within the scope of the disclosure. Typically, where multiple bias voltages 407A1 to 407N1 are implemented, the position data multiplexer module 202 can include one or more voltage converters (not shown) to produce the one or more of the bias voltages 407A1 to 407N1. The bias voltages 407A1 to 407N1 generated by a position data multiplexer module 202 for each set of position sensors 204 can be based on factors such as minimum powering objectives, corrosion from electrical contacts, corrosion removal, false positive position sensor sensings, humidity, position sensor characteristics, by way of example.

The position data multiplexer module 202 can be self-initiating in their transmission of control rod position data 70 which can be on a timed or repetitive basis or can be on a basis of changed position. In other embodiments, the transmission of control rod position data 70 can be only in responsive to a command, a query or a request from the position data control module 404 over the bus communication facility 212.

The multiplexed position signal 208 can also provide addressing of the control rod position data 70 to enable the identification of the particular control rod 54. For example, in one embodiment, an identification word having ten bits of data, can be used to identify each control rod 54 in a nuclear reactor core 22. Additionally, each position sensor 204 can be uniquely addressed or positioned within a data word to uniquely identify the current control rod position data 70 and therefore the position of the control rod 54.

A position data control module 404 can be configured with a bus communication interface 406 for receiving the one or more multiplexed position signals 208N that have been transmitted in parallel from the bus communication facility 212. The position data control module 404 can be configured to passively receive the position data 70 or to query or send a command to each of the position data multiplexer modules 202 over the bus communication facility 212. Upon receipt of the position data 70 associated from one or more control rods 54, the position data control module 404 multiplexes two or more position data 70 as received from two or more multiplexed position signals 208 into a composite position signal 408.

A data communication interface module 410 of the position data control module 404 transmits the composite position signal 408 over a data communication facility 412 to one or more coupled systems. The data communication interface module 410 and the data communication facility 412 can be any type of data communication protocol or system. For example, in some embodiments they are compatible with a data communication protocol transmitting at a data rate equal to or greater than about 1 Mbps, and in other embodiments, transmitting at a data rate equal to or greater than about 10 Mbps, or in other embodiments, equal to or greater than about 100 Mbps. The data communication facility can be a Ethernet, Fiber Distributed Data Interface, Fieldbus, by way of examples, or a similarly suitable data communications protocol and facility. Generally, a higher rate can be desirable to provide for more timely updates of position data thereby increase the data accuracy for management and control of each control rod.

The position data control module 404 can serve as a master control for all coupled position probes 68 or rod position multiplexer modules 202, such as a multiplexer card, for example. The position data control module 404 interfaces with the parallel bus communication facility 212 using a suitable communication protocol to send and receive data from each associated probe position data multiplexer module 202. The position data control module 404 collects the control rod position data 70 and control rod address for the control rod position data 70 as provided by the position data multiplexer modules 202 and packages, formats and/or multiplexes the collected position data 70 from all of the coupled position data multiplexer modules 202 for all supported position probes 68 (and position sensors 204 associated therewith) into a composite position signal 408 having a high speed data communication protocol and transmits the data communication signal over a high speed data communication facility 412. The data communication facility 412 can include an Ethernet operating at 10 Mbps, or a fiber distributed data network operating at about 10 Mbps or about 100 Mbps, by way of examples. Other data communication facilities and protocols as known to those skilled in the art or that can be developed are also suitable for transmitting the composite position signal 408.

The position data control module 404 can be configured to query each position data multiplexer module 202 coupled to an associated bus communication facility at a rate equal to or less than about every 5 msec. The position data control module 404 can be configured for collecting the control rod position data 70 from the position data multiplexer module 202 and for sending the collected control rod position data 70 to one or more rod control management systems or auxiliary systems. The disclosure herein enables the sending of updated and current control rod position data 70 to these remote systems at about equal to or less than about 5 msec. At this rate, improved reactor control rod 54 control can now be implemented.

The position data control module 404, the position data multiplexer module 202, and the bus communication facility 212 can each be configured to support a parallel communication protocol for communications. In some embodiments, this can include a Manchester encoded, time division multiplexed party line or half-duplex master-slave digital synchronous data communication protocol operating at about 1 MHz or more. In some embodiments, the bus communications can be based on one or more known communication standards, such as the MIL-STD-1553B communication standard, by way of example, or variations or similar multiplexed communication protocols. The command, synchronization, and data formatting for the bus communication can be of any type suitable for the collection and transmission of control rod position data 70 as described above, including addressing of such control rod position data 70 as to enable the identification of the control rod 54, the position probe 68, as well as one or more of the position sensors 204.

The structure of the data communication message containing the composite position signal can also be of any suitable communication protocol and format. As noted, in some embodiments this can include a Ethernet communication protocol. As with the bus communications, the data communication protocol format should include the addressing or otherwise addressing of the control rod position data 70 so as to enable the identification of the control rod 54, the position probe 68, as well as one or more of the position sensors 204.

The rod control system 400 can also include one or more rod control management systems (RCMS) 414 (shown in Fig. 4 with two such systems 414A and 414N) can be communicatively coupled to the data communication facility 412 for receiving the composite position signals 408 from one or more position data control modules 404. More than one rod control management systems 414 can be configured to receive the composite position signal 408 for redundancy or backup. In the alternative or in addition, one or more auxiliary systems 422 can be directly coupled to the data communication facility for receiving the composite position signal 408, or can be coupled to the rod control management system 414A for receiving control rod position data 70 as contained in the composite position signal 408 or operational data associated with or determined as a function of the composite position signal 408. For example, in one embodiment auxiliary system 422 can include a display located in a reactor control room. The display receives the control rod position data 70 associated with one or more control rods 54 and displays for reactor operational personal the present position of the control rod in the reactor core 22.

Some embodiments of the rod control system 400 provides for the collecting and transmitting control rod position data that is updated at timely intervals for improved nuclear reactor operation. By collecting and transmitting control rod position data 70 from each of the position sensors associated with a control rod 54 with the current system, the velocity and acceleration of the control rod 54 can now be determined. For example, as discussed above, in some embodiments control rod position data of equal to or less than about 5 msec sampling for each position sensor 204 can provide the ability to calculate a speed and acceleration to the rod during a reactor scram. In such a case, the control rod can travel up to 48 inches per sec for a distance of 144 inches, for a total movement time of around 3 seconds with a total set of greater than 600 control rod position data samples. This is significantly greater than other systems that only collected and transmitted control rod position data 70 in the order of 60 control rod position samples during a reactor scram. Through the parallel bus communication facility 212 providing the collection and transmission of control rod position data 70, the velocity and the acceleration of a control rod 54 can now be determined. As such, new methods of controlling the control rods 54 and the reactor 10 can now be developed. Additionally, systems such as the rod control system 400 can be configured to collect and transmit all control rod position data during normal as well as scram conditions for improved operation and operational planning.

In operation, some embodiments include a method in a nuclear reactor including multiplexing first control rod position data and second control rod position data into a first multiplexed position signal, multiplexing third control rod position data and fourth control rod position data into a second multiplexed position signal, and transmitting the first multiplexed position signal over a bus communication facility in parallel with the second multiplexed position signal. In some embodiment, multiplexing can include addressing the first position data with an address identifying the first control rod and the second position data with an address identifying the second control rod. In other embodiments, multiplexing can include biasing the first position sensors with a first voltage and biasing the second position sensors with a second voltage. For example, the biasing of the position sensor can include biasing a first voltage for the first position sensors that is different than a second voltage for the second position sensors.

In some embodiments of the method, the first position data is received from a plurality of first position sensors associated with a first control rod, the second position data is received from a plurality of second position sensors associated with a second control rod, the third position data is received from a plurality of third position sensors associated with a third control rod, and fourth position data is received from a plurality of fourth position sensors associated with a fourth control rod.

As noted above, some methods can include the multiplexing first control rod position data and second control rod position data into a first multiplexed position signal and multiplexing third control rod position data and fourth control rod position data into a second multiplexed position signal. Additionally, the first multiplexed position signal can be transmitted over a bus communication facility in parallel with the second multiplexed position signal.

In other embodiments, a method according to the current invention can include receiving the first multiplexed position signal and the second multiplexed position in parallel over a bus communication facility, and multiplexing at least a portion of the first multiplexed position signal with at least a portion of the second multiplexed position signal into a composite position signal and transmitting the composite position signal over a data communication facility. In some embodiments, the composite signal is transmitted over a data communication facility includes formatting the composite signal into a data communication signal having a bit rate of greater than about 1.0 Mbps or equal to or greater than about 10 Mbps, by way of examples.

In yet other embodiments of the invention, a method can include receiving the first position data, receiving the second position data, multiplexing the first position data and the second position data into a multiplexed position signal, multiplexing into a composite position signal, and transmitting the composite position signal are each repeated at a rate of equal to or less than about 5 msec.

In other operational embodiments, a method in a nuclear reactor control system can include determining first position data from a plurality of first position sensors associated with a first control rod, and determining second position data from a plurality of second position sensors associated with a second control rod. The method can also includes multiplexing the first position data and the second position data into a first multiplexed position signal associated with the first control rod and the second control rod, and transmitting the first multiplexed position signal over the bus communication facility in parallel with a second multiplexed position signal having third position data from a plurality of third position sensors associated with a third control rod. The method further can include receiving the first multiplexed position signal and the second multiplexed position over the bus communication facility, multiplexing at least a portion of the first multiplexed position signal with at least a portion of the second multiplexed position signal into a composite position signal, and transmitting the composite position signal over a data communication facility.

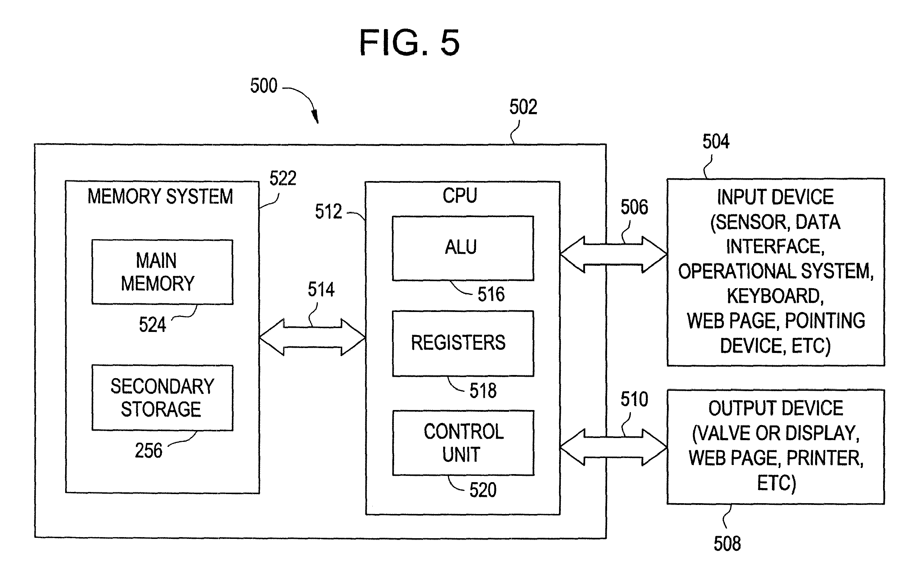

Referring now to FIG. 5, an operating environment for some embodiments of the systems and methods for collecting and transmitting position information of nuclear reactor control rods as described in this disclosure can be illustrated as exemplary computer system 500. The computer system 500 includes a computer 502 having at least one high speed processing unit (CPU) 512, in conjunction with a memory system 522, an input device 504 coupled by input interface 506, and an output device 508 coupled by output interface 510. These elements are interconnected by at least one bus structure 514. The computer system 500, or similar variations or alternatives thereof, can be utilized to implement one or more systems and methods as described above including, by way of example, the position data multiplexer module 202, the multiplexer sub-module 206, the communication interface sub-module 210, the position data control module 404, the rod control management system 404, and the control rod drive 418.

The illustrated CPU 512 is of familiar design and includes an arithmetic logic unit (ALU) 516 for performing computations, a collection of registers 518 for temporary storage of data and instructions, and a control unit 520 for controlling operation of the system 500. Any of a variety of processors, including at least those from Digital Equipment, Sun, MIPS, Motorola, NEC, Intel, Cyrix, AMD, HP, and Nexgen, are equally preferred for the CPU 512. The illustrated embodiment of the invention operates on an operating system designed to be portable to any of these processing platforms.

The memory system 522 generally includes high-speed main memory 524 in the form of a medium such as random access memory (RAM) and read only memory (ROM) semiconductor devices, and secondary storage 526 in the form of long term storage mediums such as floppy disks, hard disks, tape, CD-ROM, flash memory, by way of example. and other devices that store data using electrical, magnetic, optical or other recording media. The main memory 524 also can include video display memory for displaying images through a display device. Those skilled in the art will recognize that the memory system 522 can comprise a variety of alternative components having a variety of storage capacities.

The input devices 504 and output devices 508 also are familiar. The input device 504 can comprise a keyboard, a mouse, a physical transducer, (such as the position sensor 204), by way of example. The output device 508 can comprise a display, a printer, a transducer such as a speaker, or a communication facility such as a bus communication facility 212 or a high speed data communication facility such as Ethernet, by way of example. Some devices, such as a network adapter or a modem, can be used as input and/or output devices.

As is familiar to those skilled in the art, the computer system 500 further includes an operating system and at least one application program. The operating system is the set of software which controls the computer system's operation and the allocation of resources. The application program is the set of software that performs a task desired by the user, using computer resources made available through the operating system. Both are resident in the illustrated memory system 522.

In accordance with the practices of persons skilled in the art of computer programming, the present invention is described below with reference to symbolic representations of operations that are performed by the computer system 500. Such operations are sometimes referred to as being computer-executed. It will be appreciated that the operations which are symbolically represented include the manipulation by the CPU 512 of electrical signals representing data bits and the maintenance of data bits at memory locations in the memory system 522, as well as other processing of signals. The memory locations where data bits are maintained are physical locations that have particular electrical, magnetic, or optical properties corresponding to the data bits. Some embodiments as described herein can be implemented in a program or programs, comprising a series of instructions stored on a computer-readable medium. The computer-readable medium can be any of the devices, or a combination of the devices, described above in connection with the memory system 522.

Some of the technical effects of some of the embodiments of the invention include for increased rod position data collection and improved transmission of the collected control rod position data to a control rod management and control system thereby enabling improved control rod position data updates and management and control of the control rods within the nuclear reactor core.

When describing elements or features of the present invention or embodiments thereof, the articles "a", "an", "the", and "said" are intended to mean that there are one or more of the elements or features. The terms "comprising", "including", and "having" are intended to be inclusive and mean that there may be additional elements or features beyond those specifically described.

Those skilled in the art will recognize that various changes can be made to the exemplary embodiments and implementations described above without departing from the scope of the invention. Accordingly, all matter contained in the above description or shown in the accompanying drawings should be interpreted as illustrative and not in a limiting sense.

It is further to be understood that the processes or steps described herein are not to be construed as necessarily requiring their performance in the particular order discussed or illustrated. It is also to be understood that additional or alternative processes or steps may be employed.

**Parts List**

| ELEMENT | DESCRIPTION |
|---|---|
| 10 | Reactor pressure vessel (RPV) |
| 12 | Bottom head |
| 14 | Removable top head |
| 16 | Side wall |
| 18 | Top flange |
| 20 | Core Shroud |
| 22 | Reactor core |
| 24 | Shroud support |
| 26 | Removable shroud head |
| 28 | Annulus |
| 30 | Pump deck |
| 32 | Circular openings |
| 34 | Jet pump |
| 36 | Inlet riser pipe |
| 38 | Transition assembly |
| 40 | Inlet mixer |
| 42 | Diffuser |
| 46 | Fuel bundles |
| 48 | Steam outlet |
| 50 | Steam dryers |
| 52 | Steam outlet |
| 54 | Control rods |
| 56 | Rod guide tube |
| 58 | Control rod drive |
| 64 | Core plate |
| 66 | Rod drive housing |
| 68 | Rod position probe |
| 69 | Position data facility |
| 70 | Rod position data |
| | |
| | |
| 202 | Data multiplexers |
| 204 | Position sensors |
| 206 | Multiplexer modules |
| 208 | Multiplexed position signal |
| 210 | Transmission module |
| 212 | Bus communication facility |
| | |
| 302 | Position emitter |
| 304 | Sensor data facility |
| | |
| 400 | Rod control system |
| 402 | Control Rod Position Information System (RPIS) |
| 404 | Control module |
| 406 | Bus communication interface |
| 407 | Bias voltage |
| 408 | Composite position signal |
| 410 | Communication interface module |
| 412 | Data communication facility |
| 414 | Rod Control Management System (RCMS) |
| 418 | Control rod drive |
| 422 | Auxiliary systems |
| | |
| 500 | Computer system |
| 502 | Computer |
| 504 | Input device |
| 508 | Output device |
| 512 | CPU |
| 514 | Bus Structure |
| 516 | Arithmetic logic unit (ALU) |
| 518 | Collection of registers |
| 520 | Control unit |
| 522 | Memory system |
| 524 | Main memory |
| 526 | Secondary storage |
| | |

## Claims

1. A system for collecting control rod position data in a nuclear reactor comprising a multiplexer module 206 coupled to a plurality of first position sensors 204 associated with a first control rod 54 and a plurality of second position sensors 204 associated with a second control rod 54, the multiplexer module 206 configured for multiplexing first control rod position data and second control rod position data into a first multiplexed position signal 208, and transmitting the first multiplexed position signal 208 over a bus communication facility 212 in parallel with a second multiplexed position signal 208 having third control rod position data from a third control rod 54.

2. The system of claim 1 wherein the multiplexer module 206 is configured for receiving the first control rod position data from the first position sensors 204 and receiving second control rod position data from the second position sensors 204.

3. The system of claim 1 or claim 2 wherein the multiplexer module 206 includes a bus communication interface 406 configured for formatting and transmitting the first multiplexed position signal 208, further comprising the bus communication facility 212 coupled to the multiplexer module 206 via the bus communication interface 406.

4. The system of any preceding claim, further comprising a control module 404 coupled to the bus communications facility 212 and configured for receiving the first multiplexed position signal 208 and the second multiplexed position signal 208 and multiplexing at least a portion of the first multiplexed position signal 208 with at least a portion of the second multiplexed position signal 208 into a composite position signal 408.

5. The system of any preceding claim wherein the control module 404 is configured for formatting the composite position signal 408 into a data communication signal having a bit rate of greater than about 1.0 Mbps and transmitting the composite position signal 408 over a data communication facility 412.

6. The system of any preceding claim wherein the data communication signal is formatted to have a bit rate equal to or greater than about 10 Mbps.

7. The system of any preceding claim, further comprising a control rod position information system 402 configured for receiving the transmitted composite position signal 408 and calculating as a function of the received composite position signal 408, at least one of a velocity of at least one of the first control rod 54 or second control rod 54 and an acceleration of at least one of the first control rod 54 and second control rod 54.

8. The system of any preceding claim wherein the multiplexer module 206 is configured for determining the first control rod position data, determining the second control rod position data, multiplexing the first control rod position data and the second control rod position data into the first multiplexed position signal 208, and transmitting the first multiplexed position signal 208, each at an interval equal to or less than about 5 msec.

9. The system of any preceding claim wherein the multiplexer module 206 is configured for generating a first biasing voltage 407 to the first position sensors 204 and a second biasing voltage 407 to the second position sensors 204, wherein the first biasing voltage 407 is different than the second biasing voltage 407.

10. The system of any preceding claim wherein the multiplexer module 206 is configured for addressing the first control rod position data with an address identifying the first control rod 54 and the second control rod position data with an address identifying the second control rod 54.
